# EUROPÄISCHE PATENTSCHRIFT

(11) **EP 3 449 153 B1**
(45) Veröffentlichungstag und Bekanntmachung des Hinweises auf die Patenterteilung: **15.09.2021**
(21) Anmeldenummer: 17725856.3
(22) Anmeldetag: 28.04.2017
(51) Int. Cl.: F16G 13/14, F16G 15/04

(54) **KENTERSCHÄKEL**
KENTER SHACKLE
MANILLE DE TYPE KENTER

(30) Priorität: 29.04.2016 DE 102016108050
(43) Veröffentlichungstag der Anmeldung: 06.03.2019
(73) Patentinhaber: Schmiedestück-Vertrieb Feuerstein GmbH, 45525 Hattingen (DE)
(72) Erfinder: STUKENBERG, Till, 44879 Bochum (DE); SVERDLOVA, Nina, 44575 Castrop-Rauxel (DE)
(74) Vertreter: Tarvenkorn, Oliver
(86) Internationale Anmeldenummer: PCT/DE2017/100360
(87) Internationale Veröffentlichungsnummer: WO 2017/186237

(56) Entgegenhaltungen:
- WO-A1-98/40646
- WO-A1-2007/068472
- FR-A1- 2 581 150
- US-B2- 8 087 227

## Beschreibung

Die Erfindung betrifft einen Kenterschäkel mit den Merkmalen des Oberbegriffs des Anspruchs 1.

Bei dem in DE 199 01 233 A1 gezeigten Kettenglied greifen die Verzahnungen der Halbelemente so ineinander, dass nur sie gegen Zugkräfte in der Hauptbelastungsrichtung formschlüssig festgelegt sind, quer dazu allerdings nicht. Die Verzahnung ist nur eindimensional wirksam und nicht räumlich. Indem die Mittellinien der ineinandergreifenden Zähne schräg geneigt zur Mittelachse ausgerichtet sind, können die äußeren Schenkel der Halbelemente mit einer nur relativ geringen Wandstärkenreduktion zum jeweiligen Ende hin auskommen.

Bei einem Kenterschäkel nach dem Oberbegriff des Anspruchs 1, wie er beispielsweise aus der US 8 087 227 B2 bekannt ist, handelt es sich um ein mindestens zweiteiliges Verbinderelement. Es wird eingesetzt, um zwei Stücke einer Ankerkette nachträglich miteinander zu verbinden und die Verbindung später wieder auftrennen zu können, oder um ein weiteres Teil, wie insbesondere den Anker selbst, an eine Ankerkette anzuschließen. Wird der Kenterschäkel als Ankerkettenverbinderelement eingesetzt, so muss er symmetrisch ausgebildet sein, sodass er durch Kettenführungen hindurchläuft und genau wie die einzelnen Glieder der Ankerkette in die Kettennuss der Ankerwinde passt.

Am Ende der Kette hingegen kann ein andersartiger Kenterschäkel vorgesehen sein, der aus zwei unterschiedlichen Hälften besteht, wobei die eine Hälfte beispielsweise ebenfalls gerundet wie ein Ankerschäkel ist und die andere Hälfte V-förmig ausgebildet ist, um eine Zentrierung z. B. eines dort eingehängten Ankerkettenglieds zu bewirken. Unabhängig von der Funktion und Außenkontur sind die Halbelemente des Kenterschäkels im Bereich der Verbindung gleich ausgebildet. Als Halbelemente sind zwei spazierstockartige Elemente vorgesehen, die seitlich ineinandergeschoben werden können und die Verzahnungen bzw. Verzahnungsaufnahmen aufweisen. Dabei muss das kürzere Ende des spazierstock- oder J-förmigen Halbelements an der Mittelebene enden, damit die Halbelemente aneinander vorbei seitlich ineinandergeschoben werden können. An dem längeren Teil des Halbelements sind mehrere, in parallelen Ebenen übereinanderliegende Verzahnungen vorgesehen. Diese haben in der Seitenansicht die Form einer Sägezahn-Verzahnung. Die Verzahnungen sind an wenigstens zwei gegenüberliegenden Seiten angeordnet. Vorzugsweise sind sie an drei Seiten ausgebildet. In der Seitenansicht ist die gesamte Gruppe der Verzahnungen leicht keilförmig auslaufend, das heißt, die Breite nimmt von Ebene zu Ebene ab. Durch diese gestaffelte Anordnung werden unterschiedliche Zonen belastet.

Der Nachteil des bekannten Kettenverbinders besteht darin, dass die Verzahnungen relativ scharfkantig ausgebildet sind, sodass in den Übergängen zwischen den Ebenen und zum übrigen Halbelement hin hohe Kerbspannungen entstehen. Eine Stärkung der geschwächten Bereiche durch eine einfache Wanddickenerhöhung ist nicht möglich, denn die äußere Form des Kenterschäkels darf nicht wesentlich verändert werden, da eine Kompatibilität mit den Ankerkettengliedern erhalten bleiben muss. Die zusammengefügten Halbelemente müssen sowohl hinsichtlich der Form und Größe am Außenumfang wie auch der Form und Größe der inneren Buchten, in die die sich anschließenden Ankerkettenglieder eingreifen, mit den Ankerkettengliedern übereinstimmen.

Die Aufgabe der Erfindung bestand somit darin, die Festigkeit des Kenterschäkels zu erhöhen und Ermüdungsbrüche in den gekerbten Übergangszonen zu vermeiden.

Diese Aufgabe wird durch einen Kenterschäkel mit den Merkmalen des Anspruchs 1 gelöst.

Die Lösung der Erfindung beruht darauf, dass oberhalb der in Belastungsrichtung zuoberst liegenden Verzahnung ein Leerraum in dem Halbelement vorgesehen ist, der entweder als eine oberhalb der Verzahnungen umlaufende Nut oder als vollflächig ausgenommene Tasche ausgebildet ist. Der Außenumfang der Nut oder Tasche ist ebenfalls mit einem großen Radius gerundet. Dadurch werden die Zugspannungen länger im äußeren Umfangsbereich des Schenkels gehalten bzw. um die Verzahnungsaufnahme herum in den sich anschließenden Bogenbereich am Halbelement überführt.

Außerdem sind erfindungsgemäß alle Zahnflanken mit einem großen Radius gerundet, und zwar sowohl im Übergang an der Außenseite wie auch an den innen liegenden Kehlen.

Der Rundungsradius der Flanken und Kehlen an der Verzahnung beträgt wenigstens 3 % des Nenn-Kerndurchmessers, also beispielsweise R3 für D=76. Der Rundungsdurchmesser am Übergang in den Aufnahmeraum ist dann noch größer.

Sobald die Halbelemente miteinander verbunden sind, wird zwischen ihnen ein sogenannter Koppelstein eingesetzt. Er teilt das durch die ineinander gesteckten Halbelemente gebildete Oval in eine Acht und verhindert zudem, dass die seitlich ineinander geschobenen Halbelemente wieder auseinanderdriften können. Außerdem stützt er die Halbelemente gegeneinander ab, wenn der Kenterschäkel unter Last steht und reduziert Verformungen in dem Oval.

Der Koppelstein kann, wie an sich bekannt, durch einen Kerbstift gehalten und gesichert werden, der in eine Bohrung eingetrieben wird, die schräg durch die gesamte Einheit aus den verbundenen Halbelementen und dem eingesetzten Koppelstein verläuft.

Bei einer bevorzugten Ausführungsform ist ein besonders ausgebildeter Koppelstein vorgesehen, der ohne den langen Kerbstift befestigbar ist, so dass insbesondere auch die Bohrungen in den Halbelementen deutlich in ihrer Länge reduziert sind und sich nicht mehr bis in die äußeren Zonen neben der Verzahnungsaufnahme erstrecken, welche die gesamten Zugspannungen aufzunehmen haben. Die bei herkömmlicher Befestigung durch die Bohrung gebildeten Schwächungspunkte entfallen somit bei dieser bevorzugten Ausführungsform.

Der verbesserte Koppelstein sieht zwei Bolzen in einer Querbohrung vor, die über ein zentrales Spreizelement nach außen geschoben werden können. Damit treten die insbesondere halbkugelförmig gerundeten oder auch kegelförmig oder zylindrisch ausgebildeten Enden der Bolzen aus dem Grundkörper des Koppelsteinelements heraus und können in entsprechende Aufnahmen an den Innenflanken der Halbelemente eingreifen. Seitliche Anschlagflächen, die mit entsprechenden Vor- oder Rücksprüngen an den Innenflanken der Halbelemente zusammenwirken, verhindern, dass sich der Koppelstein um die Bolzenachse dreht. Eine Demontage des Kenterschäkels ist bei dieser bevorzugten Ausführungsform deutlich einfacher möglich, unter anderem auch unter Wasser mittels eines Tauchroboters. Es muss nämlich nur die vorzugsweise als Spreizelement eingesetzte Innensechskantschraube am Koppelstein gelöst werden, sodass die beiden Bolzen wieder nach innen zurückgeschoben werden können. Aufgrund der vorzugsweise balligen oder kegeligen Ausbildung der Enden der Bolzen werden diese automatisch zurückgeschoben, wenn der Koppelstein aus dem Kenterschäkel herausgezogen wird. Gelingt dies aufgrund fortgeschrittener Korrosion nicht, kann der Koppelstein mittig durchtrennt werden, wobei die Halbkettenelemente unbeschädigt bleiben.

Die Erfindung wird nachfolgend mit Bezug auf die Zeichnungen näher erläutert. Die Figuren zeigen im Einzelnen:
- Fig. 1: ein Halbelement in seitlicher Ansicht;
- Fig. 2, 3: die Einzelteile eines Kenterschäkels vor der Montage, jeweils in perspektivischer Ansicht;
- Fig. 4: einen montierten Kenterschäkel im Schnitt und
- Fig. 5: ein Koppelsteinelement im Schnitt.

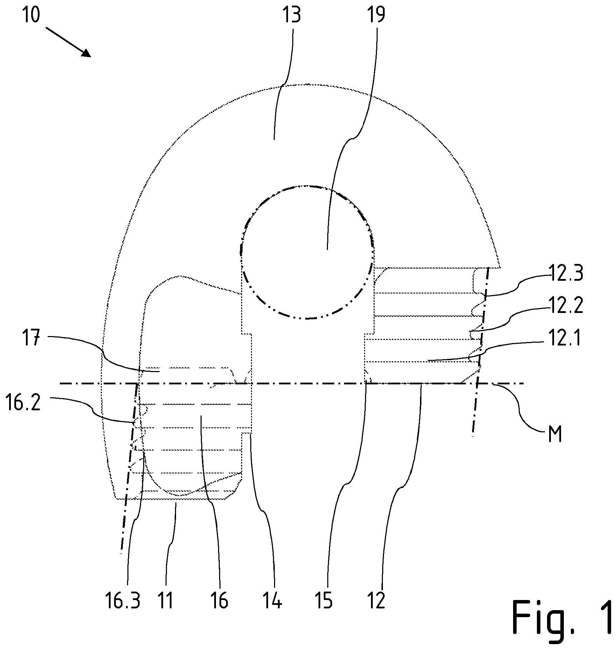

Figur 1 zeigt ein einzelnes Halbelement 10 für einen Kenterschäkel in seitlicher Ansicht. Das Halbelement 10 besteht im Wesentlichen aus einem kurzen Schenkel 12 und einem langen Schenkel 11, wobei die Schenkel 11, 12 über eine gebogene Spange 13 miteinander verbunden sind.

Wie die seitliche Ansicht in Figur 1 weiter zeigt, besitzt der kurze Schenkel 12 eine Außenverzahnung 12.1. Am gegenüberliegenden, langen Schenkel 11 beginnt auf Höhe des unteren Endes des kurzen Schenkels 12 eine Innenverzahnung 16.1, die in einem Hohlraum 16 am langen Schenkel 11 ausgebildet ist. Die querliegende strichpunktierte Linie markiert die Mittelebene M und kennzeichnet die Unterscheidung zwischen dem Hohlraum 16 mit der Innenverzahnung 16.1 sowie einem Hohlraum 17, der oberhalb des Verzahnungsbereichs 16.1 ausgebildet ist. An den zueinander weisenden Seiten der Schenkel 11, 12 sind Vorsprünge 14, 15 erkennbar, wobei die Höhe des Vorsprungs 14 genau das Doppelte der Höhe des Vorsprungs 15 an dem kurzen Schenkel 12 beträgt. Die Spange 13 besitzt insbesondere einen Durchmesser, welcher der anzuschließenden Ankerkette entspricht. Innerhalb der Spange 13 wird ein Auge 19 ausgebildet, das zur Aufnahme eines Ankerkettenglieds geeignet ist.

Die seitliche Ansicht in Figur 1 lässt insbesondere bei der Außenverzahnung 12.1 deutliche Rundungen an den spitzen äußeren Zahnflanken 12.3 des Sägezahngewindes und den innenliegenden Kehlen 12.2 erkennen. Das Gegenstück, die Innenverzahnung 16.1 im Hohlraum 16 des langen Schenkels 11 ist in gleicher Weise gerundet. Durch die deutlichen Rundungen werden Spannungsspitzen im äußeren Spitzenbereich der Zahnflanken 12.3 vermieden, insbesondere aber auch an den Zahnflankenspitzen 16.2 und Kehlen 16.1 an der Innenverzahnung. Denn das Ende des langen Schäkels ist durch das große Volumen des Aufnahmeraums 16 ohnehin geschwächt.

Um die entsprechenden Rundungen an den Zahnflankenspitzen 12.3, 16.3 und den Kehlen 12.2, 16.2 großzügig ausbilden zu können, ist ein bestimmter Abstand der parallel übereinanderliegenden Verzahnungsebenen erforderlich. Auf der anderen Seite ist der für die Verzahnungen 12.1, 16.1 zur Verfügung stehende Längenbereich am Halbelement 10 begrenzt, da die Verzahnung erst dort beginnen kann, wo der Schenkel 12 gradlinig aus der Spange 13 hervorgeht, und genau an der Mittelachse enden muss.

Die Gesamtlänge eines aus zwei Halbelementen 10 zusammengesetzten Kenterschäkels ist durch die Geometrie der sich anschließenden Ankerkette vorgegeben und kann daher auch nicht beliebig verlängert werden. Entsprechend den üblichen Dimensionen von Ankerketten und unter Ausbildung eines Rundungsradius von mindestens 3 % des Nenndurchmessers ist eine Ausbildung von genau vier übereinanderliegenden Verzahnungsebenen besonders vorteilhaft.

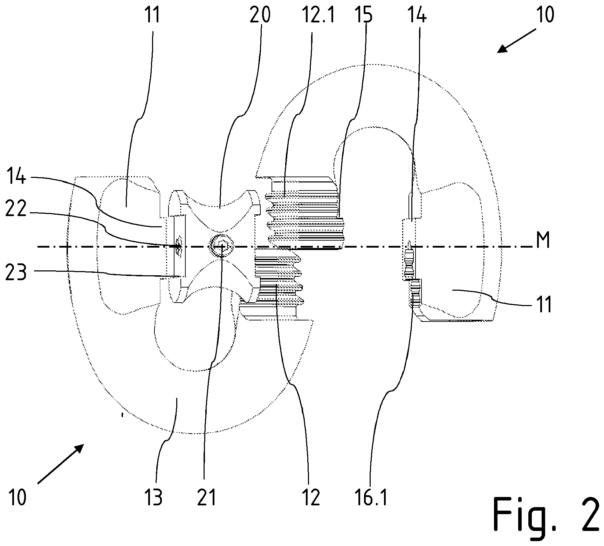

In Figur 2 sind zwei gleichartig ausgebildete Halbelemente 10 gemäß Figur 1 lagerichtig für die Montage dargestellt. Die Halbelemente 10 müssen so positioniert werden, dass die Stirnflächen der kurzen Schenkel 12 in der Mittelebene M aneinander anliegen. Die Verbindung der Halbelemente 10 erfolgt durch seitliches Einschieben, so dass an beiden Seiten die Verzahnungen ineinandergreifen. Dabei wird jeweils der außenverzahnte Bereich 12.1 des kurzen Schenkels 12 in den Hohlraum 16 mit der Innenverzahnung 16.1 am langen Schenkel 11 eingeschoben. Die Montagerichtung ist also genau quer zur Belastungsrichtung.

Um die beiden ineinandergeschobenen Halbelemente 10 aneinander zu sichern und um außerdem eine Abstützung der Schenkel 11, 12 aneinander unter Belastung zu ermöglichen, wird in die Mitte zwischen den Schenkeln 11, 12 ein sogenanntes Koppelsteinelement 20 eingesetzt. Dieses besitzt Rücksprünge 23 an den Seitenflächen, die zur Anlage an entsprechenden Vorsprüngen 14, 15 an den Halbelementen 10 vorgesehen sind. Die formschlüssige Führung über die Kanten der Vor -und Rücksprünge 14, 15, 23 verhindert eine Verdrehung des Koppelsteinelements 20. Die Sicherung des Koppelsteinelements 20 in Z-Richtung erfolgt durch eine Schraube als Spreizelement 21, über welche seitlich austretende Bolzen 22 herausgeschoben werden können, die in Aufnahmen an den Innenflanken der ineinander gesteckten Halbelemente 10 eingreifen.

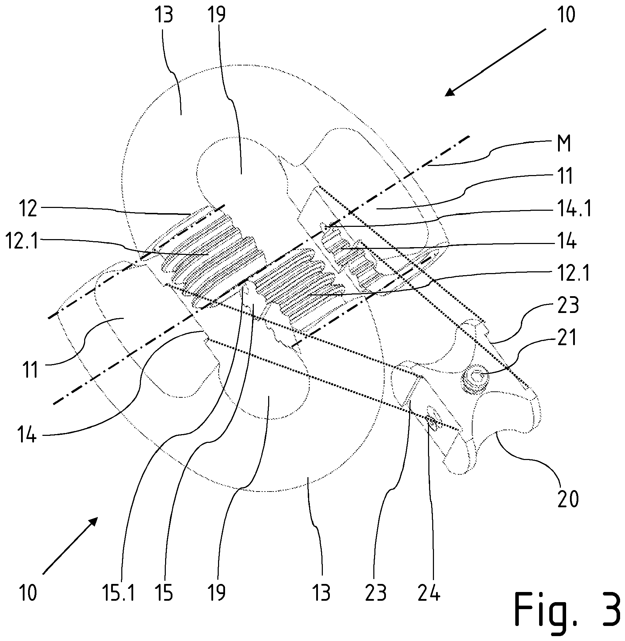

Figur 3 zeigt die beiden Halbelemente 10 und das Koppensteinelement 20 nochmals in einer etwas anderen Perspektive. Erkennbar ist hier noch, dass die nach innen weisenden Flächen des kurzen Schenkels 12 keine Verzahnung aufweisen, da dort auch kein Eingriff mit einem Gegenstück am jeweiligen langen Schenkel 11 möglich ist. Wohl aber ist an der Innenseite des kurzen Schenkels 12 ein Vorsprung 15 ausgebildet, um den Vorsprung 14 am langen Schenkel 11 nach dem Ineinanderschieben der Halbelemente 10 entsprechend auszufüllen und zu ergänzen.

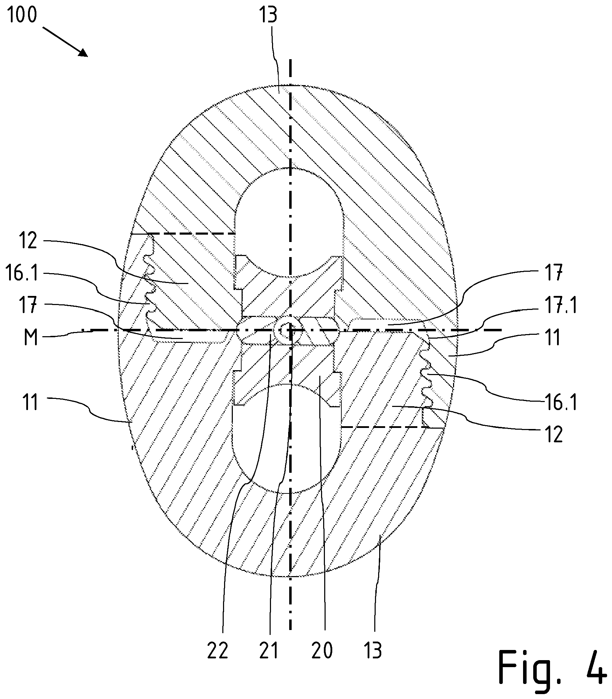

Figur 4 zeigt einen fertig montierten Kenterschäkel 100 im Schnitt. Die Verzahnungen am kurzen Schenkel 12 außen und an der Innenseite des Aufnahmeraums 16 greifen vollständig ineinander. Oberhalb der Außenverzahnung 12.1 am kurzen Schenkel 12 jedoch erweitert sich der Aufnahmeraum 16 in einen Hohlraum 17, der auch bei dem fertig montierten Kenterschäkel 100 leer bleibt. Vorzugsweise läuft der Hohlraum 17 mit einer seitlichen Flanke 17.1 bereits von der letzten Zahnspitze 16.3 in der zuoberst liegenden Verzahnungsebene aus grob in Richtung der Längsachse des Kenterschäkels 100, also parallel zur Längsachse oder in einem spitzen Winkel dazu. Mit einer weiteren Rundung geht die seitliche Flanke 17.1 des Hohlraums 17 in einen Dachbereich über. Bei dem unter Zug stehenden Kenterschäkel 100 werden die Kräfte auf die quer zur Längsachse ausgerichteten Anlageflächen der Verzahnung abgeleitet. Durch die Anordnung des Hohlraumes 17, der den zur Aufnahme der Verzahnung 12.1 eigentlich nur benötigten Aufnahmeraum 16 durch Leerraum ergänzt, werden die unter Last auftretenden Zugspannungen wesentlich besser umgeleitet. Eine punktuelle Spannungskonzentration wird vermieden. Die Spannungen werden vielmehr am Hohlraum 17 vorbei in den Anfangsbereich des jeweiligen langen Schenkels 11 und von dort in die gebogene Spange 13 umgeleitet.

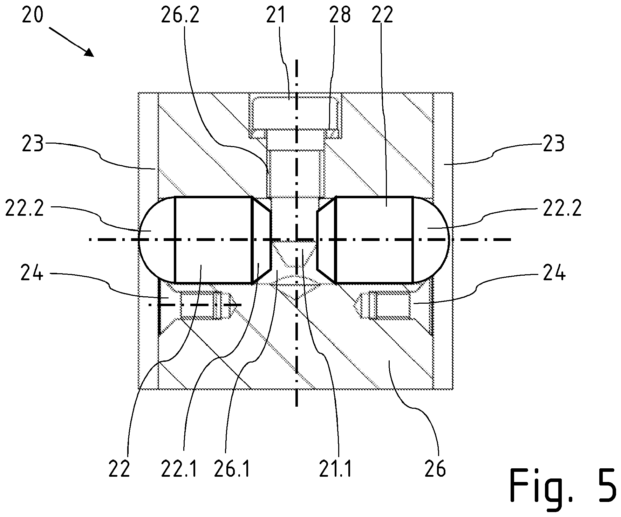

Figur 5 zeigt einen Querschnitt durch das Koppensteinelement 20. Dieses besitzt in einem Gehäuse 26 eine Querbohrung 26.1, in der zwei Sicherungsbolzen 22 verschiebbar angeordnet sind. Diese sind an ihren nach außen weisenden Enden 22.2 halbkugelförmig abgerundet. Sie werden durch Schrauben 24 vor dem Herausfallen gesichert. An den zueinander weisenden Innenflächen besitzen die Bolzen 22 einen kegelförmigen Abschnitt 22.1. Senkrecht zur Querbohrung 26.1 ist eine Gewindebohrung 26.2 ausgebildet, in der ein Spreizelement 21 mit einem Gewindeabsatz aufgenommen ist. Hierbei handelt es sich um ein schraubenartiges Element, das einen Schraubenkopf aufweist, der in einer Senkung aufgenommen wird. Unter dem Schraubenkopf kann noch ein Federring 28 eingelegt sein.

Der in die Querbohrung 26.1 hineinragende Teil des Spreizelements 21 ist zunächst glatt zylindrisch ausgebildet und an seinem Ende kegelstumpfförmig angespitzt. Mit dem Einschrauben des Spreizelementes 21 in das Gehäuse des Koppelsteinelements 20 trifft die Spitze 21.1 auf die kegelförmigen Absätze 22.1 der Bolzen 22 und drückt diese somit nach außen. Die gerundeten Außenseiten der Bolzen 22 greifen in Bohrungen ein, die an den Innenflanken der Schenkel 11,12 ausgebildet sind. Damit ist das Koppensteinelement 20 fest zwischen den beiden Halbelementen 10 festgelegt. Es blockiert die ineinandergeschobenen Halbelemente 10 und hält diese unter Belastung auf Abstand, sodass keine zu großen Verformungen und entsprechende Erhöhungen der Zugspannungen in den Halbelementen 10 entstehen.

Die Mittelachse der Bolzen 22 liegt genau in der Mittelebene M zwischen den Halbelementen 10, sodass die Aufnahmebohrung für die Bolzen 22 ebenfalls zweigeteilt ist. Wie in Figur 3 erkennbar, ist eine Hälfte 14.1 der Bohrung an dem Vorsprung 14 an der Innenseite des langen Schenkels 11 erkennbar. Eine weitere Hälfte 15.1 der Bohrung ist am Vorsprung 15 des kurzen Schenkels 12 ausgebildet. Mit dem Zusammenschieben der Halbelemente 10 entsteht eine geschlossene Bohrung, in welche die Bolzen 22 beziehungsweise deren gerundete Enden 22.2, eingreifen können.

## Patentansprüche

1. Kenterschäkel (100) für Ankerketten, wenigstens umfassend zwei miteinander koppelbare Halbelemente (10) und ein zwischen den Halbelementen (10) einsetzbares Koppelsteinelement (20),
wobei die Halbelemente (10) jeweils eine L-förmige oder J-förmige Konfiguration aufweisen, bei der am Ende eines kurzen Verbindungsschenkels (12) eine Außenverzahnung (12.1) mit mehreren parallelen Verzahnungsebenen ausgebildet ist und bei der am Ende eines langen Verbindungsschenkels (11) eine Aufnahmekammer (16) ausgebildet ist, die eine Innenverzahnung (16.1) mit mehreren parallelen Verzahnungsebenen besitzt, in welche die Außenverzahnung (12.1) des kurzen Verbindungsschenkels (12) eingreift, und wobei die Verbindungsschenkel (11, 12) über eine gekrümmte Spange (13) miteinander verbunden sind,
**dadurch gekennzeichnet, dass** die Aufnahmekammer (16) im langen Schenkel (11) oberhalb einer Mittelebene (M) durch einen Hohlraum (17) erweitert ist, wobei die Mittelebene (M) entlang der Stirnseite der Außenverzahnung (12.1) des kurzen Schenkels (12) und oberhalb der obersten, zur Spange (13) weisenden Verzahnungsebene der Innenverzahnung (16.1) verläuft und dass die seitliche Flanke (17.1) des Hohlraums (17) mit einer Rundung in einen Dachbereich des Hohlraums (17) übergeht.

2. Kenterschäkel (100) nach Anspruch 1, **dadurch gekennzeichnet, dass** die oberhalb der Stirnseite der Außenverzahnung (12.1) gemessene Höhe des Hohlraums (17) wenigstens das 0,6fache bis 1,2fache der Höhe einer Verzahnungsebene umfasst.

3. Kenterschäkel (100) nach Anspruch 1 oder 2, **dadurch gekennzeichnet, dass** der Hohlraum (17) durch eine sich zumindest oberhalb der Zahnflanken der obersten Verzahnungsebene erstreckende Nut gebildet ist.

4. Kenterschäkel (100) nach Anspruch 1 oder 2, **dadurch gekennzeichnet, dass** der Hohlraum (17) durch eine sich zumindest oberhalb der Zahnflanken der obersten Verzahnungsebene erstreckende Tasche gebildet ist.

5. Kenterschäkel (100) nach einem der vorhergehenden Ansprüche, **dadurch gekennzeichnet, dass** sich in der obersten Verzahnungsebene die äußeren Flanken der Innenverzahnung (16.1) in Richtung der Spange (13) fortsetzen und in der Rundung am Dach des Hohlraums (17) auslaufen.

6. Kenterschäkel (100) nach einem der vorhergehenden Ansprüche, **dadurch gekennzeichnet, dass** die Verzahnungen (12.1, 16.1) an den spitzen Übergängen (12.3, 13.3) zwischen den Zahnflanken und in den inneren Kehlen (12.2, 13.2) mit einem Radius von wenigstens 3% des Nenn-Kettendurchmessers gerundet sind.

7. Kenterschäkel (100) nach einem der vorhergehenden Ansprüche, **dadurch gekennzeichnet, dass** die Verzahnungen (12.1, 16.1) jeweils vier Verzahnungsebenen umfassen.

8. Kenterschäkel (100) nach einem der vorhergehenden Ansprüche, **dadurch gekennzeichnet, dass** die Verzahnungen (12.1, 16.1) als Sägezahnverzahnungen ausgebildet sind und mit einer Belastungsflanke quer oder in einem stumpfen Winkel zur Längsachse des Kenterschäkels (100) ausgerichtet sind.

## Claims

1. Kenter shackle (100) for anchor chains, at least comprising two half-elements (10) that are able to be coupled together and a coupling block element (20) that is insertable between the half-elements (10),
wherein the half-elements (10) each have an L-shaped or J-shaped configuration, in which, at the end of a short connecting leg (12), an external toothing (12.1) having a plurality of parallel toothing planes is formed, and in which, at the end of a long connecting leg (11), a receiving chamber (16) is formed, which has an internal toothing (16.1) with a plurality of parallel toothing planes, into which the external toothing (12.1) of the short connecting leg (12) engages, and wherein the connecting legs (11, 12) are connected together via a curved clasp (13),
**characterized in that** the receiving chamber (16) in the long leg (11) is widened above a central plane (M) by a cavity (17), wherein the central plane (M) extends along the end face of the external toothing (12.1) of the short leg (12) and above the uppermost toothing plane, facing the clasp (13), of the internal toothing (16.1), and **in that** the lateral flank (17.1) of the cavity (17) transitions by way of a rounded portion into a top region of the cavity (17) .

2. Kenter shackle (100) according to Claim 1, **characterized in that** the height, measured above the end face of the external toothing (12.1), of the cavity (17) makes up at least 0.6 to 1.2 times the height of a toothing plane.

3. Kenter shackle (100) according to Claim 1 or 2, **characterized in that** the cavity (17) is formed by a groove extending at least above the tooth flanks of the uppermost toothing plane.

4. Kenter shackle (100) according to Claim 1 or 2, **characterized in that** the cavity (17) is formed by a pocket extending at least above the tooth flanks of the uppermost toothing plane.

5. Kenter shackle (100) according to one of the preceding claims, **characterized in that**, in the uppermost toothing plane, the outer flanks of the internal toothing (16.1) continue in the direction of the clasp (13) and end in the rounded portion at the top of the cavity (17).

6. Kenter shackle (100) according to one of the preceding claims, **characterized in that** the toothings (12.1, 16.1) are rounded at the sharp transitions (12.3, 13.3) between the tooth flanks and in the inner flutes (12.2, 13.2) with a radius of at least 3% of the nominal chain diameter.

7. Kenter shackle (100) according to one of the preceding claims, **characterized in that** the toothings (12.1, 16.1) each comprise four toothing planes.

8. Kenter shackle (100) according to one of the preceding claims, **characterized in that** the toothings (12.1, 16.1) are in the form of sawtooth toothings and are oriented with a loading flank transverse or at an obtuse angle to the longitudinal axis of the Kenter shackle (100).

## Revendications

1. Manille Kenter (100) pour des chaînes d'ancres, comprenant au moins deux demi-éléments (10) accouplables ensemble et un élément d'accouplement (20) insérable entre les demi-éléments (10),
les demi-éléments (10) présentant chacun une configuration en forme de L ou en forme de J, dans laquelle une denture extérieure (12.1) est formée à l'extrémité d'une branche de liaison courte (12), avec plusieurs plans de denture parallèles, et dans laquelle une chambre de réception (16) est formée à l'extrémité d'une branche de liaison longue (11), qui présente une denture intérieure (16.1) avec plusieurs plans de denture parallèles, dans laquelle la denture extérieure (12.1) de la branche de liaison courte (12) entre en prise, et les branches de liaison (11, 12) étant reliées entre elles par l'intermédiaire d'une attache incurvée (13),
**caractérisée en ce que** la chambre de réception (16) dans la branche longue (11) est élargie par une cavité (17) au-dessus d'un plan médian (M), le plan médian (M) s'étendant le long du côté frontal de la denture extérieure (12.1) de la branche courte (12) et au-dessus du plan de denture le plus haut, tourné vers l'attache (13), de la denture intérieure (16.1), et **en ce que** le flanc latéral (17.1) de la cavité (17) se raccorde avec un arrondissement à une zone de toit de la cavité (17).

2. Manille Kenter (100) selon la revendication 1, **caractérisée en ce que** la hauteur de la cavité (17) mesurée au-dessus du côté frontal de la denture extérieure (12.1) est d'au moins 0,6 fois à 1,2 fois la hauteur d'un plan de denture.

3. Manille Kenter (100) selon la revendication 1 ou 2, **caractérisée en ce que** la cavité (17) est formée par une rainure s'étendant au moins au-dessus des flancs de dents du plan de denture le plus haut.

4. Manille Kenter (100) selon la revendication 1 ou 2, **caractérisée en ce que** la cavité (17) est formée par une poche s'étendant au moins au-dessus des flancs de dents du plan de denture le plus haut.

5. Manille Kenter (100) selon l'une quelconque des revendications précédentes, **caractérisée en ce que**, dans le plan de denture le plus haut, les flancs extérieurs de la denture intérieure (16.1) se poursuivent dans la direction de l'attache (13) et se terminent dans l'arrondissement sur le toit de la cavité (17).

6. Manille Kenter (100) selon l'une quelconque des revendications précédentes, **caractérisée en ce que** les dentures (12.1, 16.1) sont arrondies sur les transitions pointues (12.3, 13.3) entre les flancs de dents et dans les gorges intérieures (12.2, 13.2) avec un rayon d'au moins 3 % du diamètre de chaîne nominal.

7. Manille Kenter (100) selon l'une quelconque des revendications précédentes, **caractérisée en ce que** les dentures (12.1, 16.1) comprennent chacune quatre plans de denture.

8. Manille Kenter (100) selon l'une quelconque des revendications précédentes, **caractérisée en ce que** les dentures (12.1, 16.1) sont configurées en tant que dentures en dents de scie et sont alignées avec un flanc de sollicitation transversalement ou avec un angle obtus par rapport à l'axe longitudinal de la manille Kenter (100).
